# EUROPEAN PATENT SPECIFICATION

(11) **EP 2 460 777 B1**
(45) Date of publication and mention of the grant of the patent: **16.04.2014**
(21) Application number: 11191151.7
(22) Date of filing: 29.11.2011
(51) Int. Cl.: C03B 19/09

(54) **Apparatus for manufacturing vitreous silica crucible**
Vorrichtung zur Herstellung eines Quarzglastiegels
Appareil pour la fabrication d'un creuset en verre de silice

(30) Priority: 02.12.2010 JP 2010269039
(43) Date of publication of application: 06.06.2012
(73) Proprietor: Japan Super Quartz Corporation, Akita-shi Akita 010-0065 (JP)
(72) Inventor: Sudo, Toshiaki, Akita-shi Akita 010-0065 (JP); Kishi, Hiroshi, Akita-shi Akita 010-0065 (JP); Fujita, Takeshi, Akita-shi Akita 010-0065 (JP); Kanda, Minoru, Akita-shi Akita 010-0065 (JP)
(74) Representative: Gulde Hengelhaupt Ziebig & Schneider

(56) References cited:
- EP-A1- 2 172 432
- JP-A- 2001 089 171
- JP-A- 2009 161 362
- US-A1- 2002 170 316
- US-A1- 2009 277 223

## Description

### BACKGROUND OF THE INTENTION

### 1: Field of the Invention

The present invention relates to an apparatus for manufacturing a vitreous silica crucible by the rotating mold method.

### 2. Description of the Related Art

The rotating mold method has been known as a method of manufacturing a vitreous silica crucible for pulling a silicon single crystal (See JP-B-S59-34659, JP-A-H11-236233, JP-A-2001089171). In this method, used is an apparatus for manufacturing a vitreous silica crucible including a rotating mold to deposit silica powder on a round-bottom (bowl-shaped) inner surface, and a plurality of electrodes provided above the rotating mold.

In other words, in this kind of an apparatus for manufacturing a vitreous silica crucible, silica powder is deposited on an inner surface of a rotating mold to form a round-bottom silica powder layer with a predetermined thickness while rotating the rotating mold around the rotation axis, and the silica powder layer is heated and fused to be vitrified by arc discharge generated between a plurality of electrode tips to manufacture a vitreous silica crucible.

By the way, it is necessary to adjust appropriately heating temperature by arc discharge to fuse a silica powder layer appropriately. The adjustment of heating temperature can be realized by controlling power supplied to electrodes. However, control of supplied power is not sufficient to conduct heating and fusing in accordance with a shape of a silica powder layer, and it is necessary to adjust distances between electrode tips to adjust arc discharge output and stabilize arc discharge. Conventionally, there is provided an apparatus for manufacturing a vitreous silica crucible, including a mechanism moving each electrode above the rotating mold to adjust distances between electrode tips.

On the other hand, when heating and fusing a silica powder layer, powder dusts such as fume (silica fume) can come out of the rotating mold. Conventionally, there is provided an apparatus for manufacturing a vitreous silica crucible, including a plate-shaped partition wall above the rotating mold to protect a supporting mechanism for supporting electrodes above the rotating mold. The partition wall includes a plurality of through-holes penetrating in a thickness direction of the partition wall, and the electrodes are separately inserted into these through-holes (compare e.g. EP 2172432 A1) or each of at least two electrode arrangements is inserted into a large through-hole (US 2002/017316 A1).

JP-A-2001089171 discloses a partition wall with through holes for the three electrodes. The through holes have a Y shape to reduce the size of the openings.
EP 2172432 A1 describes a partition wall which is also a supporting stand for the electrodes. The electrodes can be moved vertically and can be rotated around a shaft located within the supporting unit.

### SUMMARY OF THE INVENTION

When both of a mechanism to move electrodes and a partition wall are provided on a conventional manufacturing apparatus, the opening area of the through-holes needs to be enlarged to avoid interference between the electrodes and the partition wall. In this case, powder dusts are likely to get into an upper side of the partition wall.

Furthermore, there are problems that the above-mentioned powder dusts and other unintended dusts can drop into the rotating mold through the through-holes, and heat during fusing process can get into the upper side of the partition wall.

Furthermore, it is necessary to adjust heating temperature appropriately to realize an appropriate fused state which is required for manufacturing of a vitreous silica crucible. The adjustment of heating temperature can be realized by controlling power supplied to electrodes. However, more precise control of a crucible inner surface state is nowadays required. When more precise fusing condition control is required to realize the precise control, control of supplied power is not sufficient, and it is necessary to more precisely adjust distances between electrode tips by increasing or decreasing the distances. Because the interelectrode distances changes, the opening needs to be relatively large to avoid interference between the electrodes and the partition wall. Then, there occur problems that unintended dusts can drop through the opening into the fusing room, and high temperature gas or radiation heat which is approx. 2000 to 3000 deg. C during fusing can get into the upper side of the partition wall

The present invention has been made in view of the above-mentioned circumstances, and provides an apparatus for manufacturing a vitreous silica crucible which has a structure which can reduce gaps between a partition wall and electrodes inserted into through-holes formed in the partition wall while enabling electrodes to move to easily adjust a heating temperature of arc discharge.

The present invention provides the following configurations in order to solve the above-mentioned problems.
An apparatus for manufacturing a vitreous silica crucible of the present invention includes:
a plurality of rod-shaped electrodes to generate arc discharge between tips of the electrodes;
a rotating mold for forming a silica powder layer on an inner surface of the rotating mold so that the silica powder layer is heated and fused to be vitrified by the arc discharge;
a plate-shaped partition wall placed above the rotating mold and having through-holes penetrating in a thickness direction thereof, the electrodes inserted into the through-holes and directed to the rotating mold; and
a rocking unit, provided on an upper side of the partition wall, for rocking the electrodes around virtual rocking axes; wherein
the virtual rocking axes are axis lines passing through the through-holes and the virtual rocking axes are placed within the through-holes; wherein the through-holes each have a long-hole shape along a rocking direction of the electrode, the through-holes each have a short axis length which is equal to or 0.5 to 1.5 mm larger than a diameter of the electrode, and a long axis length which is 3 to 10 mm longer than a diameter of the electrode.

According to such configuration, in order to adjust distances between a plurality of electrode tips for the purpose of adjusting the amount of heat generated by arc discharge, each of the electrodes can be rocked by the rocking unit. In this case, a portion of the electrode near the virtual rocking axis around which the electrode is rocked is only slightly moved. Because this virtual rocking axis is placed within the through-hole into which the electrode is inserted, the size of the through-hole can be reduced.

Furthermore, in the apparatus of the present invention, the virtual rocking axes are preferred to be axis lines extending along a center of a thickness direction of the partition wall. In this case, the size of the through-hole can be minimized.

Furthermore, in the apparatus of the present invention, it is preferred that a reciprocating unit for reciprocating the electrodes in longitudinal directions is provided on an upper side of the partition wall. When reciprocating movements of electrodes are enabled by the reciprocating unit in addition to rocking movements of the electrodes by the rocking unit, distances between a plurality of electrode tips can be more flexibly adjusted. Especially, even when electrode tips are consumed by arc discharge, influence of the consumption can be minimized by adjusting the positions of the electrodes by the reciprocating unit, and thus maintenance is easy. In addition, in the present invention, the rocking centers can be placed within the partition wall in a thickness direction. A virtual rocking axis can be placed in the rocking center. In this case, rocking movements of the electrodes can be conducted more certainly.

Furthermore, in the apparatus of the present invention, the partition wall is preferred to be movable in a vertical direction.

When the partition wall is movable in a vertical direction, distances from the electrodes to a silica powder layer to be fused can be adjusted without changing distances between tips of the electrodes. Therefore, the amount of heat provided by arc discharge can be more easily adjusted. Furthermore, electrode tip positions can be controlled more precisely by advancing electrodes consumed by arc discharge so that a heating state by arc discharge can be more precisely controlled.

Furthermore, in the apparatus of the present invention, the through-holes each have a long-hole shape along a rocking direction of the electrode, the through-holes each have a short axis length which is equal to or slightly (approx. 1 mm) larger than a diameter of the electrode, and a long axis length which is approx. 3 to 10 mm longer than a diameter of the electrode.

In this case, the amount of contaminants such as gas, fume, heat, and dusts which move between an upper side and a lower side of the partition wall can be reduced. Therefore, damages of a manufacturing apparatus caused at high temperature in a manufacturing process, frequency of maintenance, and production cost can be reduced. According to this configuration, temperature can be adjusted easily to a necessary temperature for fusing. In addition, through-holes in the partition wall which are used for rocking movements of electrodes and vertical movement of the partition wall can be reduced in size. Thus, diffusion of heat generated during fusing through the through-holes to an upper side of the partition wall can be prevented. Furthermore, dusts attached to or existing in a machine room or the partition wall (ceiling) in an upper side of the partition wall become less likely to drop to the rotating mold in a fusing room through the through-holes.

### EFFECT OF THE INVENTION

According to an apparatus for manufacturing a vitreous silica crucible of the present invention, distances between a plurality of electrode tips can be adjusted by rocking the electrodes, and thus heating temperature by arc discharge can be easily adjusted. Furthermore, through-holes for inserting electrodes can be reduced in size. Thus, diffusion of heat generated during fusing through the through-holes can be prevented. In addition, dusts attached to or existing in an upper side of the partition wall become less likely to drop to a fused material in a fusing room through the through-holes during a fusing preparation process or during a fusing process.

### BRIEF DESCRIPTION OF THE DRAWINGS

Fig. 1 is a front sectional view illustrating an apparatus for manufacturing a vitreous silica crucible according to an embodiment of the present invention.
Fig. 2 is a plan view illustrating electrode positions of an apparatus for manufacturing a vitreous silica crucible.
Fig. 3 is a front sectional view illustrating electrode positions of an apparatus for manufacturing a vitreous silica crucible.
Fig. 4 is a front sectional view illustrating an electrode moving mechanism according to an embodiment of the present invention.
Fig. 5 is a flat sectional view illustrating a relationship between electrodes and through-holes.
Figs. 6A and 6B are front sectional views of a partition wall each illustrating a rocking state of an electrode.
Fig. 7 is a front sectional view illustrating another example of an electrode moving mechanism.
Fig. 8 is a front sectional view illustrating another example of an electrode moving mechanism.

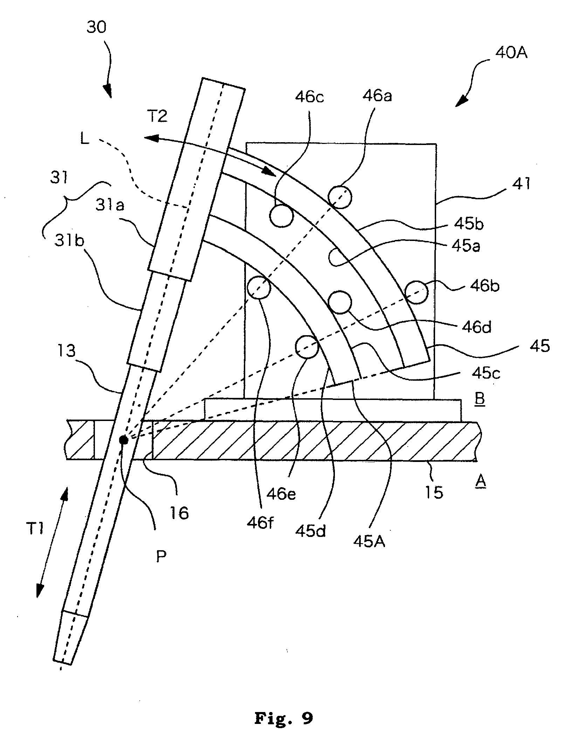

Fig. 9 is a front sectional view illustrating another example of an electrode moving mechanism.

### DESCRIPTION OF THE PREFERRED EMBODIMENTS

Hereinafter, an embodiment of an apparatus for manufacturing a vitreous silica crucible according to the present invention will be explained in detail with reference to drawings.

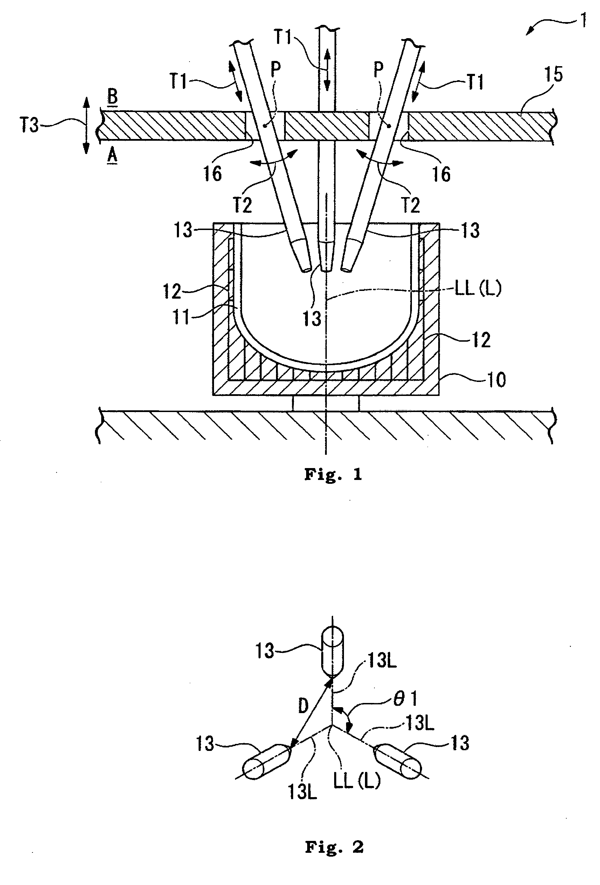

Fig. 1 is a front sectional view illustrating a portion of an apparatus for manufacturing a vitreous silica crucible according to an embodiment of the present invention. In Fig. 1, reference symbol 1 indicates the apparatus for manufacturing a vitreous silica crucible.

The apparatus 1 will be explained as an apparatus used as a heat source in manufacturing process of a vitreous silica crucible with an opening diameter of 24 inches or more, approx. 32 to 44 to 50 inches. However, the present invention is not limited to the configurations shown here as long as the apparatus can be used for arc fusing nonconductor. The present invention is not limited in terms of the kind of a material to be fused, a crucible opening diameter, an apparatus output, and usage as a heat source.

The apparatus 1 is divided by a horizontally-extending plate-shaped partition wall 15 into a fusing room A and an operating room B. The fusing room A is an underside space of the partition wall 15, and the operating room B is an upper side space of the partition wall 15. A cooling media such as water may be introduced into the partition wall 15 for cooling in an arc fusing process. The fusing room A and the operating room B are closed spaces surrounded by sidewalls etc.

The fusing room A is a room for fusing a material. As shown in Fig. 1, placed in the fusing room A is a rotating mold 10 with a round-bottom inner surface defining an outer shape of a vitreous silica crucible. The rotating mold 10 is rotatable by a rotation unit (not shown). Raw material powder (silica powder) is deposited on the inner surface of the rotating mold 10 while rotating the rotating mold 10 to form a silica powder layer 11 with a predetermined thickness. A plurality of ventilation holes 12 are provided inside of the rotating mold 10. The ventilation holes 12 are open to the inner surface of the rotating mold 10 and are connected to a pressure-reducing unit (not shown) to reduce the pressure of inside of the silica powder layer 11.

The rotating mold 10 may be configured to capable of being brought in or out of the fusing room A. According to the configuration, for example, the silica powder layer 11 is formed on the rotating mold 10 outside of the fusing room A, and then the rotating mold 10 is brought in the fusing room A for heating and fusing the silica powder layer 11.

On the other hand, the partition wall 15 which constitutes a ceiling of the fusing room A includes three through-holes 16 penetrating in a thickness direction (a vertical direction) of the partition wall 15. The through-holes 16 communicate the fusing room A and the operating room B. Carbon electrodes 13 for arc heating are inserted into the through-holes 16 between the operating room B and the fusing room A. In this configuration, the carbon electrodes 13 are directed to the rotating mold 10 in the fusing room A. The carbon electrodes 13 are connected to a power-supply unit (not shown), and thus can be used for heating the silica powder layer 11.

The carbon electrodes 13 are carbon-electrode rods with the same shape to generate arc discharge of, for example, alternate current three-phase (R phase, S phase, T phase). They are separately supported by an electrode moving mechanism 20 (not shown in Fig. 1) placed in the operating room B which is a space above the partition wall 15. Each electrode 13 is connected to an alternate current power-supply (not shown) via a cable. One electrode moving mechanism 20 may be provided to each electrode 13, or one electrode moving mechanism 20 which is capable of moving a plurality of electrodes separately may be provided.

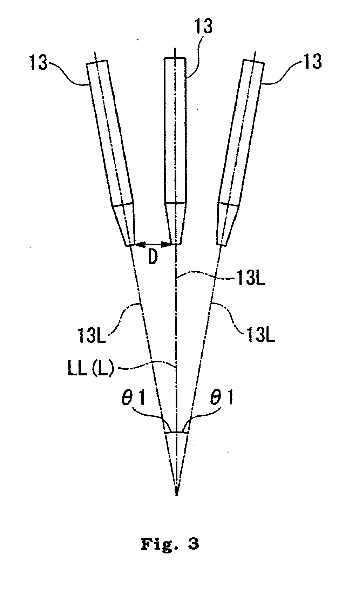

As shown in Figs. 2 and 3, the carbon electrodes 13 are placed around an electrode position center line LL so as to be placed on the same circle in a plan view. The carbon electrodes 13 are provided to form an inverse three-sided pyramid having a downwardly-directed tip. They are provided so that angles between axes 13L of the electrodes 13 are θ1. In the exemplary drawings, the electrode position center line LL is on the same line as the rotation center line L of the rotating mold 10. However, the electrode position center line LL may be shifted from the rotation center line L by moving the carbon electrodes 13 by the electrode moving mechanism 20.

In the present invention, silica powder is used as raw material. Silica powder may be either synthetic silica powder or natural silica powder. Natural silica powder may be quartz powder, or powder of a well-known raw material for a vitreous silica crucible such as quartz crystal, quartz sand etc. Furthermore, silica powder may be crystalline, amorphous, or vitreous.

The apparatus 1 is a high-output apparatus which can heat and fuse a nonconductive material (silica powder) by arc discharge generated between a plurality of tips of the carbon electrodes 13 with an output range of 300 kVA to 12,000 kVA.

The number of electrodes is not limited to that of the drawings, and can be set discretionarily. Depending on the number of electrodes, the electrodes may be powered by two-phase alternative current, three-phase alternative current, or four-phase alternative current to generate arc discharge. In this case, the number of through-holes 16 may be increased in accordance with the number of the electrodes 13,

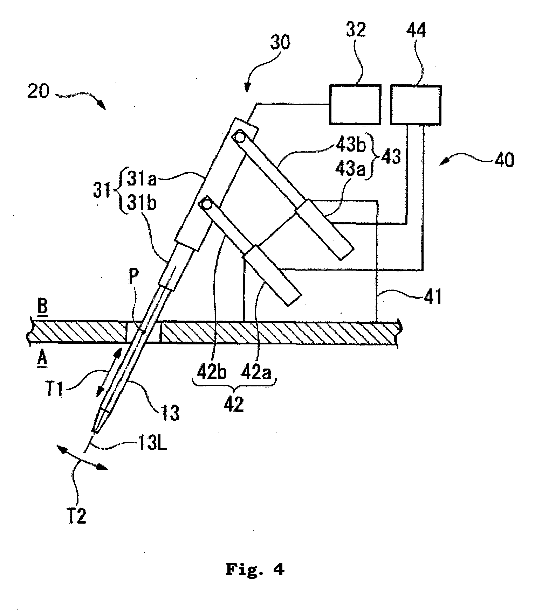

As shown in Fig. 4, the electrode moving mechanism 20 may be provided within the operating room B which is an upper side space above the partition wall 15. The mechanism 20 includes a reciprocating unit 30 for reciprocating the carbon electrode 13 in a direction of the axis line 13L, and a rocking unit 40 for rocking the carbon electrode 13 around a predetermined virtual rocking axis P.

The reciprocating unit 30 includes a first cylinder 31 and a reciprocating movement controller 32. The first cylinder 31 is a cylinder operated by a hydraulic or pneumatic pressure etc., and includes a first cylinder main body 31a and a first rod 31b. The first rod 31b is configured to reciprocate from the first cylinder main body 31a along an axis direction of the first cylinder 31. The rear end of the carbon electrode 13 is connected to the tip of the first rod 31 b, and the axis line 13L is on the same line as the axis of the first cylinder 31. The amount of displacement of the first rod 31b of the first cylinder 31 is controlled by the reciprocating movement controller 32.

Therefore, the carbon electrode 13 reciprocates in a direction of the axis line 13L, that is, a reciprocating movement direction T1 when the first rod 31b is moved in accordance with instructions from the reciprocating movement controller 32.

A rocking unit 40 includes a base 41, a second cylinder 42, a third cylinder 43, and a rocking controller 44.

The second cylinder 42 and the third cylinder 43 each have the same configuration as that of the first cylinder 31. That is, the second cylinder 42 includes a second cylinder main body 42a and a second rod 42b, and the third cylinder 43 includes a third cylinder main body 43a and a third rod 43b. The second rod 42b and the third rod 43b are configured to reciprocate from the second cylinder main body 42a and third cylinder main body 43a along axis directions of the second cylinder 42 and the third cylinder 43, respectively.

The second cylinder 42 and the third cylinder 43 are supported on a base 41 mounted on the partition wall 15. Specifically, the second cylinder 42 is placed on a lower side of the third cylinder 43. The second cylinder main body 42a and the third cylinder main body 43a are fixed to the base 41 in a way that the second rod 42b and the third rod 43b reciprocate in an upward oblique direction.

The tip of the second rod 42b is rotatably connected to a tip side (a side on which the carbon electrode 13 is connected) of the first cylinder main body 31a. The tip of the third rod 43b is rotatably connected to a base side (an opposite side of a side on which the carbon electrode 13 is connected) of the first cylinder main body 31a.

The amount of displacement of the second rod 42b of the second cylinder 42 and the third rod 43b of the third cylinder 43 is controlled by the reciprocating movement controller 32. The first cylinder main body 31a can be rocked around the virtual rocking axis P by reciprocating the second rod 42b and the third rod 43b in different amounts of displacements from each other.

In other words, the amounts of displacements of the second rod 42b and the third rod 43b are controlled so that a connection point of the second rod 42b to the first cylinder main body 31a and a connection point of the third rod 43b to the first cylinder main body 31a which are on the same radial direction of a circle centering on the virtual rocking axis P draw circular arcs with different radii of circles each centering on the virtual rocking axis P. Thus, the carbon electrode 13 is rocked around the virtual rocking axis P.

Thus, the carbon electrode 13 connected to the first cylinder 31 can be rocked around the virtual rocking axis P in a rocking direction T2. The rocking direction T2 is a direction along a vertical plane including the electrode position center line LL and the center of the through-hole 16. In other words, the rocking direction T2 is a direction of a circular arc centering on the virtual rocking axis P which is a normal line of a plane including the electrode position center line LL and the axis line 13L of the carbon electrode 13 in the initial position before the start of arc discharge. In other words, the rocking direction T2 is a radial direction from the electrode position center line LL in a plan view. The virtual rocking axis P is in a direction expressed by a vector product of the electrode position center line LL and the axis line 13L of the carbon electrode 13.

Here, the virtual rocking axis P is a virtual axis passing through the through-hole 16 of the partition wall. More specifically, the virtual rocking axis P passes through a central position of the carbon electrode 13, and is a horizontal axis crossing orthogonally the axis line 13L of the carbon electrode 13. The virtual rocking axis P is set to be on the same line as a line extending within a thickness range of the partition wall 15. Furthermore, in the present embodiment, the virtual rocking axis P is set to extend along a center of the thickness direction of the partition wall 15.

Thus, the rocking unit 40 is configured to be capable of rocking the carbon electrode 13 around the virtual rocking axis P passing through the through-hole 16 in the rocking direction T2.

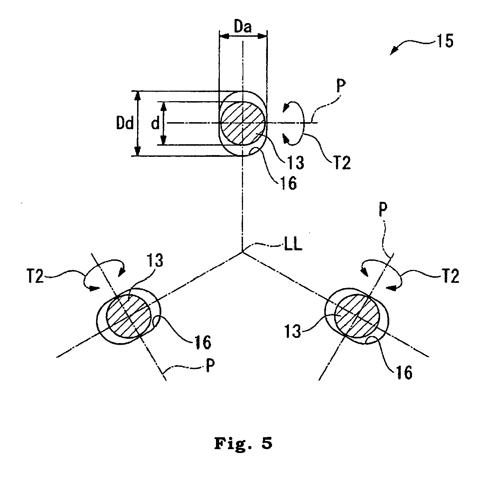

The through-holes 16 each have a long-hole shape along the rocking direction T2 in a plan view as shown in Fig. 5. Three electrodes are separately inserted into the through-holes 16, and the long-hole shapes of the through-holes 16 enables the rocking movement in the rocking direction T2. The through-holes 16 each have a long axis along a direction passing through the electrode position center line LL and each of the through-holes 16. In the present embodiment, the shape of the through-hole 16 in a cross-section perpendicular to the axis line 13L of the carbon electrode 13 is circular, and the diameter of the circle is about 40 to 100 mm. A short axis length Da of the through-hole 16 is equal to or slightly (about 1 mm, 0.5 to 1.5 mm) larger than the diameter d of the carbon electrode 13, while a long axis length Db of the through-hole 16 is about 3 to 10 mm larger than the diameter d of the carbon electrode 13.

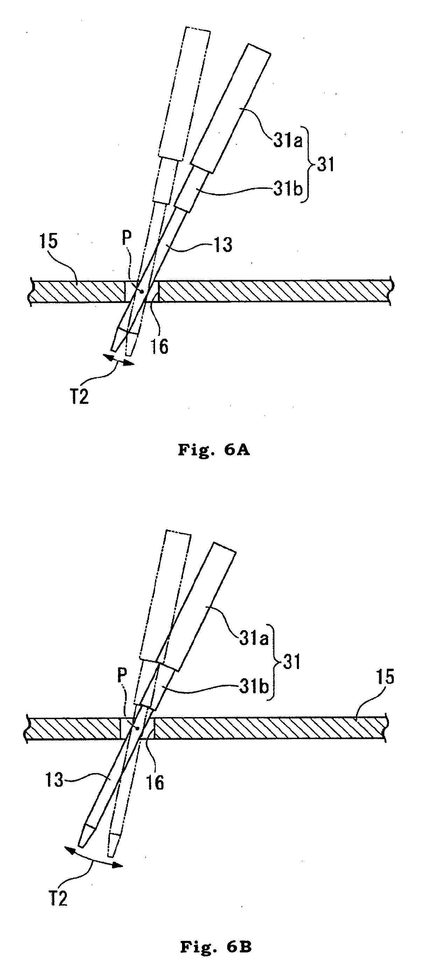

As mentioned above, in the electrode moving mechanism 20, the reciprocating unit 30 is capable of reciprocating the carbon electrode 13 in the axis line 13L direction, that is, the reciprocating movement direction T1, and the rocking unit 40 is capable of rocking the carbon electrode 13 around the virtual rocking axis P in the rocking direction T2. The movement by the reciprocating unit 30 does not interfere with the movement by the rocking unit 40. In other words, as shown in Figs. 6A and 6B, the carbon electrode 13 can be rocked around the virtual rocking axis P by the rocking unit 40 irrespective of the amount of displacement of the carbon electrode 13 in the reciprocating movement direction T 1 by the reciprocating unit 30.

Therefore, distances D between the tips of the carbon electrodes 13 (Hereinafter, referred to as "interelectrode distances D") can be adjusted by reciprocating movements of the carbon electrodes 13 in the reciprocating movement directions T1 by the reciprocating unit 30 and rocking movements of the carbon electrodes 13 in the rocking direction T2 by the rocking unit 40. Angles θ1 between the axis lines 13L of the carbon electrodes 13 (Hereinafter, referred to as "opening angles θ1") can be adjusted by rocking the carbon electrodes 13 in the rocking directions T2 by the rocking unit 40.

In the present embodiment, the partition wall 15 on which the electrode moving mechanism 20 is mounted is itself movable in the vertical movement direction T3. The movement of the partition wall 15 in the vertical movement direction T3 can be realized by a mechanism such as rack and pinion. Therefore, the height positions of the carbon electrodes 13 with respect to the rotating mold 10 can be adjusted by moving the partition wall 15 in the vertical movement direction T3.

Next, a method of manufacturing a vitreous silica crucible by fusing a silica powder layer 11 using the above-mentioned apparatus 1 will be explained.

In heating and fusing the round-bottom silica powder layer 11 formed on the inner surface of the rotating mold 10, before the start of arc discharge, the carbon electrodes 13 are placed symmetrically, as center arc, around the electrode position center line LL which is on the same line as the rotation center line L of the rotating mold 10. Specifically, as shown in Figs. 2 and 3, the carbon electrodes 13 are set to form an inverse three-sided pyramid having a downwardly-directed tip so that angles between axis lines 13L of the electrodes 13 are θ1. The tips of the carbon electrodes 13 are set to contact each other so as not to generate arc discharge.

Next, power-supply to the carbon electrodes 13 by the power-supply unit (not shown) is started. Arc discharge is not yet generated at this stage because the tips of the carbon electrode 13 contact each other.

Thereafter, the interelectrode distances D are enlarged while maintaining the inverse three-sided pyramid with a downward tip by the electrode position setting unit 20 (carbon electrode distance enlarging process). Then, arc discharge starts to be generated between the carbon electrodes 13. Supplied power to each of the carbon electrodes 13 is controlled to be a power density of 40 kVA/cm² to 1700 kVA/cm² by the power-supply unit.

The interelectrode distances D are adjusted by the electrode moving mechanism 20 so as to heat the silica powder layer 11 up to a temperature necessary for fusing the silica powder layer 11 (carbon electrode distance adjusting process). At this stage, supplied power to each of the carbon electrodes 13 remains controlled to be a power density of 40 kVA/cm² to 1700 kVA/cm² by the power-supply unit. According to this configuration, arc discharge is stabilized and an arc flame is continued to be generated.

The height positions of the carbon electrodes 13 with respect to the rotating mold 10 are adjusted so as to heat the silica powder layer 11 up to a temperature necessary for fusing the silica powder layer 11 by moving the partition wall 15 in the vertical movement direction T3 (carbon electrode height adjusting process). At this stage, supplied power to each of the carbon electrodes 13 remains controlled to be a power density of 40 kVA/cm² to 1700 kVA/cm² by the power-supply unit.

Finally, power-supply by the power-supply unit is terminated when the silica powder layer 11 is fused to be a predetermined state (power-supply terminating process) to complete manufacturing of a vitreous silica crucible. In the above-mentioned processes, the pressure in a region around the silica powder layer 11 may be controlled by the pressure-reducing unit connected to the ventilation hole 12.

As explained above, in the apparatus 1 of the present embodiment, interelectrode distances D of the carbon electrodes 13 are adjusted by moving each of the carbon electrodes 13 by the electrode moving mechanism 20 in adjusting arc discharge state. Here, especially when the interelectrode distances D are adjusted by rocking the carbon electrodes 13 by the rocking unit 40 of the electrode moving mechanism 20, the tips of the carbon electrodes 13 are displaced as shown in Figs. 6A and 6B, but portions of the carbon electrodes 13 near the virtual rocking axes P, i.e. portions of the carbon electrodes 13 within the through-holes 16 only slightly move. Therefore, even when the carbon electrodes 13 are rocked to a large extent, the carbon electrodes 13 only slightly move within the through-holes 16, and thus the sizes of the through-holes 16 can be reduced while enlarging a rocking range of the carbon electrodes 13.

Furthermore, in the present embodiment, because the virtual rocking axis P extends along a center in a thickness direction of the partition wall 15, the size of the through-hole 16 can be extremely minimized.

In this case, the long axis length Db of the through-hole 16 can be made approx. 3 to 10 mm longer than the diameter d of the electrode 13, and thus the gas between the carbon electrode 13 and the partition wall 15 in the through-hole 16 can be minimized. According to this configuration, diffusion of heat generated during fusing through the through-hole 16 to the operating room B can be prevented. In addition, dusts attached to or existing in the operating room B become less likely to drop to a fused material in the fusing room through the through-hole 16 during a fusing preparation process or during a fusing process.

Opening angles θ1 can be adjusted in a broad range by rocking the carbon electrodes 13. Thus, the configuration to allow movement of the carbon electrodes 13 with respect to the through-holes 16 in a broad range is especially advantageous in manufacturing a vitreous silica crucible with a large opening diameter (i.e. 30 inches or more).

That is, in manufacturing a vitreous silica crucible with a large opening diameter, output of arc discharge necessary for fusing silica powder increases. So, the carbon electrodes 13 are quickly consumed from the tip sides and therefore, the interelectrode distances D quickly increase. In the apparatus 1 of the present embodiment, because the interelectrode distances D can be adjusted in a broad range, the lifetime of the carbon electrode 13 can be substantially extended.

Furthermore, in order to increase output of arc discharge, it is necessary to enlarge the opening angles θ1 of the carbon electrodes 13 so as not to generate arc discharge in portions other than the tips of the carbon electrodes 13. In the apparatus 1 of the present embodiment, because the opening angles θ1 can be adjusted in a broad range by rocking the carbon electrodes 13 around the virtual rocking axes P, vitreous silica crucibles with various opening diameters (a small diameter to a large diameter) can be manufactured using the same apparatus 1.

Furthermore, because the movement of the carbon electrode 13 in the axis line 13L is enabled by the reciprocating unit 30 in addition to rocking movement of the carbon electrode 13 by the rocking unit 40, the interelectrode distances D can be adjusted more flexibly, and therefore, for example, the interelectrode distances D can adjusted discretionarily while maintaining the opening angles θ between the carbon electrodes 13.

Especially, when the tips of the carbon electrodes 13 are consumed and thus the lengths of the carbon electrodes 13 become insufficient, the carbon electrodes 13 can be advanced toward the rotating mold 10 to compensate the insufficiency of the lengths, and therefore the maintenance is easy.

Furthermore, because the partition wall 15 is movable in a vertical direction, distances from the carbon electrodes to the silica powder layer 11 can be adjusted without changing the interelectrode distances D. Therefore, the amount of heat provided by arc discharge can be more easily adjusted.

The present invention has been explained in view of an embodiment, but is not limited to the embodiment. Specific configurations of the apparatus of the present invention can be designed in various ways.

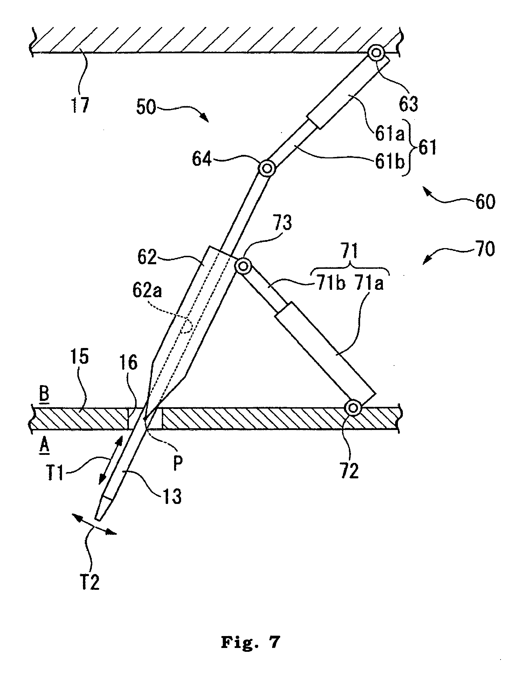

For example, in another example, as shown in Fig. 7, the electrode moving mechanism 20 can be an electrode moving mechanism 50 including a reciprocating unit 60 and a rocking unit 70.

The electrode moving mechanism 50 is similar to the above embodiment in that it reciprocates the carbon electrode 13 by the reciprocating unit 60 in the reciprocating movement direction T1, and rocks the carbon electrode 13 by the rocking unit 70 in the rocking direction T2, but is different from the above embodiment in the configuration.

As shown in Fig. 7, the reciprocating unit 60 of this embodiment includes a reciprocating movement cylinder 61 and a guiding member 62. The reciprocating movement cylinder 61 has one end rotatably fixed to a ceiling 17 of the operating room B, and the other end rotatably connected to the rear end of the carbon electrode 13. The guiding member 62 has a tubular shape into which the carbon electrode 13 can be inserted, and has one end rotatable around the virtual rocking axis P.

The reciprocating movement cylinder 61 has a tubular cylinder main body 61a and a rod 61b. The rod 61 b is capable of reciprocating from the cylinder main body 61a. A base end (one end) of the cylinder main body 61 a is rotatably connected to the ceiling 17. According to this configulation, the reciprocating movement cylinder 61 is rotatable around a rotatable joint 63.

The tip of the rod 61b is connected to the rear end of the carbon electrode 13 via a rotatable joint 64. According to this configulation, the tip of the rod 61b and the rear end of the carbon electrode 13 are rotatably connected.

The guiding member 62 has a tubular shape with an insert hole 62a into which the carbon electrode 13 can be inserted, and has one end whose both sides are rotatably supported by a pair of axis members (not shown) which are on the same line as the virtual rocking axis P. The axis members do not pass through the insert hole 62a, and supports only both sides of the guiding member 62. Thus, the movement of the carbon electrode 13 passing through the guiding member 62 is not prevented by the axis members.

The pair of the axis members are attached to the inner wall of the through-hole 16, and one end, of the guiding member 62, supported by the axis members is preferred to be tapered toward the tip of the one end so that interference with the partition wall during rotation is prevented.

As shown in Fig. 7, the rocking unit 70 in this embodiment is comprised of a rocking cylinder 71 having one end rotatably connected to the partition wall 15 and the other end rotatably connected to the guiding member 62 of the reciprocating unit 60.

The rocking cylinder 71 includes a tubular cylinder main body 71a and a rod 71b. The rod 71 b is capable of reciprocating from the cylinder main body 71a. A base end (one end) of the cylinder main body 71a is rotatably connected to the partition wall 15 via a rotatable joint 72. The tip of the rod 71b is connected to the guiding member 62 via a rotatable joint 73. According to this configulation, the rocking cylinder 71 is obliquely provided between the partition wall 15 and the guiding member 62, and is rotatable with respect to each of the partition wall 15 and the guiding member 62.

According to such electrode moving mechanism 50, the opening angles θ and the interelectrode distances D of the carbon electrodes 13 are adjusted by rocking the carbon electrodes 13 by the rocking unit 70 and reciprocating the carbon electrodes 13 by the reciprocating unit 60.

In other words, first, the guiding member 62 connected to the rod 71b is rocked around the virtual rocking axis P by reciprocating the rod 71b of the rocking cylinder 71 which is the rocking unit 70. According to this movement, the carbon electrode 13 inserted into the guiding member 62 is also rocked in the rocking direction T2 to determined the opening angles θ of the carbon electrodes 13.

Next, when the rod 61b of the reciprocating movement cylinder 61 is reciprocated, the carbon electrode 13 connected to the rod 61 b is reciprocated along the insert hole 62a of the guiding member 62. According to this movement, the carbon electrode 13 is reciprocated in the reciprocating movement direction T 1 which is the axis line 13L direction.

As described here, the electrode moving mechanism 50 of this embodiment is capable of reciprocating the carbon electrode 13 in the reciprocating movement direction T1 and rocking the carbon electrode 13 around the virtual rocking axis P in the rocking direction T2. Thus, similar to the above embodiment, the size of the through-hole 16 can be minimized and the interelectrode distances D and the opening angles θ can be adjusted in a broad range.

The configuration of the electrode moving mechanism is not limited to those of the mechanisms 20, 50, but can be other configurations as long as the electrode moving mechanism can rock the carbon electrode 13 around the virtual rocking axis P and reciprocate the carbon electrode 13 in the axis line 13L direction.

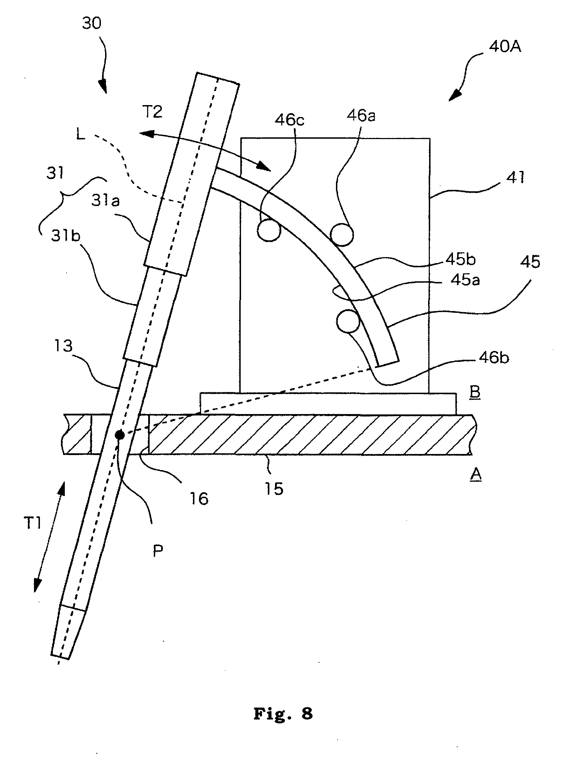

For example, in still another example, the electrode moving mechanism 20 can be a rocking unit 40A shown in Fig. 8. Here, corresponding components are given the same reference symbols, and the explanation is not repeated. The rocking unit 40A includes a base 41, a rocking position regulating guide 45, and drive rollers 46a, 46b, 46c.

The position regulating guide 45 is a plate-shaped member including a base end and a tip end. The base end is connected to the first cylinder 31, and the tip end extends from the axis line L of the first cylinder 31 in the T2 direction. The guide 45 includes a position regulating front surface 45a and a position regulating back surface 45b. These surfaces 45a, 45b extend from the base end side to the tip end side and have shapes like side surfaces of concentric cylinders. The position regulating guide 45 can be moved in a direction along the position regulating surfaces 45a, 45b, and is movably supported in a way that the position regulating surfaces 45a, 45b are supported by the drive rollers 46a, 46b, 46c.

The drive rollers 46a, 46b, 46c are on the base 41, and are each rotatable around an axis parallel to the virtual rocking axis P. The drive rollers 46a, 46b, 46c are provided so as to have equal distances therebetween in a plane stipulated by the direction T2. The drive roller 46a is provided on the position regulating back surface 45b (upper side), and the drive rollers 46b, 46c are provided on the position regulating front surface 45a (lower side). These rollers are provided in the order of the drive roller 46c, the drive roller 46a, and the drive roller 46b from the base end side to the tip end side. The drive rollers 46b, 46c are provided so as to have an equal distance from the virtual rocking axis P.

The drive rollers 46a, 46b, 46c can be controlled by the rocking controller 44, although not shown.

According to the configulation, the position regulating surfaces 45a, 45b have arc shapes of circles centering on the virtual rocking axis P. Thus, when the drive rollers 46a, 46b, 46c are rotated under control of the rocking controller 44, the position regulating guide 45 moves along the shapes of the position regulating surfaces 45a, 45b. More specifically, the position regulating guide 45 placed between the drive roller 46a and the drive rollers 46b, 46c moves in a circumferential direction around the virtual rocking axis P while the position regulating front surface 45a contacts the drive rollers 46b, 46c which are equidistant from the virtual rocking axis P, and the position regulating back surface 45b contacts the drive roller 46a. In other words, the position regulating guide 45 moves around the virtual rocking axis P while maintaining the distance from the virtual rocking axis P and contacting the drive rollers 46a, 46b, 46c.

Thus, movement of the first cylinder 31 is regulated in accordance with the shapes of the position regulating surfaces 45a, 45b, the carbon electrode 13 can be rocked around the virtual rocking axis P as a rocking central axis line in the rocking direction T2.

The drive rollers 46a, 46b, 46 and the position regulating surfaces 45a, 45b may have concavity and convexity engaging each other. According to this configuration, like a gear or rack and pinion, position regulation can become more certain

Furthermore, a position regulating guide 45A can be provided on a different position from the position regulating guide 45 in terms of the distance from the virtual rocking axis P in the axis line L direction of the first cylinder 31. In this case, electrode rocking position can be set by a plurality of position regulating guides, and thus more precise control of movement position becomes possible.

A drive roller 46d is placed on a position regulating back surface 45c (upper side) of the position regulating guide 45A, and drive rollers 46f, 46e are placed on the position regulating front surface 45d (lower side) of the position regulating guide 45A. In addition, the drive rollers 46a, 46b are placed on the position regulating back surface 45b (upper side) of the position regulating guide 45 and the drive roller 46c is placed on the position regulating front surface 45a (lower side) of the position regulating guide 45.

Here, the drive rollers 46a, 46f and the drive rollers 46b, 46e are provided on the same radial directions and on the same circumferential positions of circles centering of the virtual rocking axis P. It is preferable that only the drive roller 46d and/or the drive roller 46c which are placed between the position regulating guides 45, 45A are driven by a drive source such as a motor. In this case, fluctuation in rocking the carbon electrode 31 can be reduced, and thus distances of the electrode tips can be controlled precisely.

According to this configuration, arc discharge is stabilized, and thus the amount of heating in manufacturing a crucible can be controlled precisely. Therefore, an inner surface of a vitreous silica crucible, which largely affects product quality in pulling a single crystal, can be in a good state without departing from a desired state.

## Claims

1. An apparatus (1) for manufacturing a vitreous silica crucible comprising:
a plurality of rod-shaped electrodes (13) to generate arc discharge between tips of the electrodes;
a rotating mold (10) for forming a silica powder layer (11) on an inner surface of the rotating mold (10) so that the silica powder layer (11) is heated and fused to be vitrified by the arc discharge;
a plate-shaped partition wall (15) placed above the rotating mold (10) and having through-holes (16) penetrating in a thickness direction thereof, the electrodes (13) inserted into the through-holes (16) and directed to the rotating mold (10); and
a rocking unit (40), provided on an upper side of the partition wall (15), for rocking the electrodes (13) around virtual rocking axes (P);
wherein
the virtual rocking axes (P) are axis lines passing through the through-holes (16) and the virtual rocking axes (P) are placed within the through-holes (16); wherein the through-holes (16) each have a long-hole shape along a rocking direction (T2) of the electrode (13), the through-holes (16) each have a short axis length (Da) which is equal to or 0.5 to 1.5 mm larger than a diameter (d) of the electrode (13), and a long axis length (Db) which is 3 to 10 mm longer than a diameter (d) of the electrode (13).

2. The apparatus (1) of claim 1, wherein the virtual rocking axes (P) are axis lines extending along a center of a thickness direction of the partition wall (15).

3. The apparatus (1) of claim 1 or 2, further comprising a reciprocating unit (30), provided on an upper side of the partition wall (15), for reciprocating the electrodes (13) in longitudinal directions (T1).

4. The apparatus (1) of any one of claims 1 to 3, wherein the partition wall (15) is movable in a vertical direction (T3).

## Patentansprüche

1. Vorrichtung (1) zur Herstellung eines Quarzglastiegels, umfassend:
eine Mehrzahl von stabförmigen Elektroden (13) zur Erzeugung einer Bogenentladung zwischen den Spitzen der Elektroden;
eine rotierende Form (10) zur Ausbildung einer Quarzpulverschicht (11) auf einer inneren Oberfläche der rotierenden Form (10), so dass die Quarzpulverschicht (11) durch die Bogenentladung erhitzt und zur Verglasung geschmolzen wird;
eine über der rotierenden Form (10) platzierte plattenförmige Trennwand (15) mit Durchgangslöchern (16), die diese in einer Dickenrichtung durchdringen, wobei die Elektroden (13) in die Durchgangslöcher (16) eingesetzt sind und zur rotierenden Form (10) weisend ausgerichtet sind, und
eine Schwenkeinheit (40), bereitgestellt auf einer Oberseite der Trennwand (15), zum Schwenken der Elektroden (13) um virtuelle Schwenkachsen (P);
wobei
die virtuellen Schwenkachsen (P) durch die Durchgangslöcher (16) verlaufende Achsenlinien sind und die virtuellen Schwenkachsen (P) innerhalb der Durchgangslöcher angeordnet sind; wobei die Durchgangslöcher (16) jeweils eine Langlochform entlang einer Schwenkrichtung (T2) der Elektrode (13) aufweisen, die Durchgangslöcher (16) jeweils eine kurze Achsenlänge (Da) aufweisen, die gleich oder 0,5 bis 1,5 mm größer ist als ein Durchmesser (d) der Elektrode (13), und eine lange Achsenlänge (Db), die 3 bis 10 mm länger ist als ein Durchmesser (d) der Elektrode (13).

2. Vorrichtung (1) nach Anspruch 1, wobei die virtuellen Schwenkachsen (P) Achsenlinien sind, die entlang einer Mitte einer Dickenrichtung der Trennwand (15) verlaufen.

3. Vorrichtung (1) nach Anspruch 1 oder 2, weiterhin umfassend eine Hin- und Herbewegungseinheit (30) auf einer Oberseite der Trennwand (15) zum Hin- und Herbewegen der Elektroden (13) in Längsrichtungen (T1).

4. Vorrichtung (1) nach einem der Ansprüche 1 bis 3, wobei die Trennwand (15) in einer vertikalen Richtung (T3) bewegbar ist.

## Revendications

1. Appareil (1) destiné à la fabrication d'un creuset en verre de silice comprenant :
une pluralité d'électrodes (13) en forme de tiges pour générer une décharge en arc entre les pointes des électrodes ;
un moule rotatif (10) pour former une couche de poudre de silice (11) sur une surface intérieure du moule rotatif (10) de telle sorte que la couche de poudre de silice (11) est chauffée et fondue pour être vitrifiée par la décharge en arc ;
une paroi de séparation (15) en forme de plaque placée au-dessus du moule rotatif (10) et ayant des trous débouchants (16) pénétrant dans une direction de l'épaisseur de celle-ci, les électrodes (13) étant insérées dans les trous débouchants (16) et dirigées vers le moule rotatif (10) ; et
une unité de basculement (40), disposée sur un côté supérieur de la paroi de séparation (15), pour faire basculer les électrodes (13) autour d'axes de basculement virtuels (P) ;
dans lequel
les axes de basculement virtuels (P) sont des lignes d'axe traversant les trous débouchants (16), et les axes de basculement virtuels (P) sont placés à l'intérieur des trous débouchants (16) ; dans lequel les trous débouchants (16) ont chacun un forme de trou long le long d'une direction de basculement (T2) de l'électrode (13), les trous débouchants (16) ont chacun une courte longueur d'axe (Da) qui est égale au diamètre (d) de l'électrode (13) ou plus grande de 0,5 à 1,5 mm que ce diamètre, et une longue longueur d'axe (Db) qui est plus grande de 3 à 10 mm qu'un diamètre (d) de l'électrode (13).

2. Appareil (1) selon la revendication 1, dans lequel les axes de basculement virtuels (P) sont des lignes d'axe s'étendant le long d'un centre d'une direction de l'épaisseur de la paroi de séparation (15).

3. Appareil (1) selon la revendication 1 ou 2, comprenant également une unité à mouvement alternatif (30) disposée sur un côté supérieur de la paroi de séparation (15) et destinée à faire se déplacer les électrodes (13) dans des directions longitudinales (T1).

4. Appareil (1) selon l'une quelconque des revendications 1 à 3, dans lequel la paroi de séparation (15) est mobile dans une direction verticale (T3).
